# EUROPÄISCHE PATENTANMELDUNG

(11) **EP 4 108 543 A1**
(43) Veröffentlichungstag der Anmeldung: **28.12.2022**
(21) Anmeldenummer: 22177145.4
(22) Anmeldetag: 03.06.2022
(51) Int. Cl.: B62D 1/04, B62D 1/08

(54) **FAHRZEUGLENKRAD**

(30) Priorität: 22.06.2021 DE 202021103327 U
(71) Anmelder: Dalphi Metal España, S.A., 36213 Vigo (ES); Safelife Industria de Componentes de Seguranca Automovel S.A., 4990-645 Gemieira (PT)
(72) Erfinder: Trindade, Paulo, 4925-580 Perre (Viana do Castelo) (PT); Sousa Canastra, Bruno Joaquim, 4900-297 Viana do Castelo (PT); Mendes, Dylan, 4900-425 Viana do Castelo (PT); Cerqueira da Rocha, João Paulo, 4900-726 Areosa, Viana do Castelo (PT); Gonçalves de Sousa, Ana Alexandra, 4910-609 Viana do Castelo (PT); Pereira, Ruben Vieira, 4930-505 Valença (PT)
(74) Vertreter: ZF Patentabteilung - DIPS

(57) **Zusammenfassung**

Die Erfindung betrifft Fahrzeuglenkrad, mit einer Lenkradachse (A), um die das Fahrzeuglenkrad 10 im eingebauten Zustand drehbar ist, einer zentralen Lenkradnabe 12 zur Befestigung des Fahrzeuglenkrads 10 in einem Kraftfahrzeug, durch welche sich die Lenkradachse A erstreckt, einem Lenkradkranz 14, der die Lenkradnabe 12 zumindest teilweise umgibt, und wenigstens einer Lenkradspeiche 16, welche den Lenkradkranz 14 an der Lenkradnabe 12 befestigt, wobei die Lenkradnabe 12 und der Lenkradkranz 14 ferner durch ein flexibles Verbindungselement 18 miteinander verbunden sind.

## Beschreibung

Die Erfindung betrifft ein Fahrzeuglenkrad, mit einer Lenkradachse, um die das Fahrzeuglenkrad im eingebauten Zustand drehbar ist, einer zentralen Lenkradnabe zur Befestigung des Fahrzeuglenkrads in einem Kraftfahrzeug, durch welche sich die Lenkradachse erstreckt, einem Lenkradkranz, der die Lenkradnabe zumindest teilweise umgibt, und wenigstens einer Lenkradspeiche, welche den Lenkradkranz an der Lenkradnabe befestigt.

Ein solcher Lenkradaufbau ist aus dem Stand der Technik allgemein bekannt, wobei das Fahrzeuglenkrad üblicherweise zwei oder drei Lenkradspeichen aufweist. Es wurden jedoch bereits auch Lenkradvarianten mit mehr als drei oder nur einer einzigen Lenkradspeiche vorgeschlagen.

Das 3-Speichen-Design des Lenkrads ist äußerst robust und wird seitens der Fahrzeugnutzer häufig als optisch ansprechend empfunden, kann aber mit Blick auf das recht hohe Gewicht und seine Dämpfungseigenschaften bei einem Insassenaufprall im Crashfall unter Umständen auch Nachteile mit sich bringen.

Aufgabe der Erfindung ist es daher, ein Fahrzeuglenkrad zu schaffen, welches strukturelle Verbesserungen ermöglicht, z.B. in Bezug auf Gewicht, Nachgiebigkeit etc., und dabei eine gefällige Optik beibehält.

Erfindungsgemäß wird diese Aufgabe gelöst durch ein Fahrzeuglenkrad der eingangs genannten Art, bei dem die Lenkradnabe und der Lenkradkranz ferner durch ein flexibles Verbindungselement miteinander verbunden sind. Dieses flexible Verbindungselement wirkt optisch als Lenkradspeiche, ermöglicht im Vergleich zu einer im Wesentlichen starren Lenkradspeiche jedoch ein geringeres Gewicht und eine größere Nachgiebigkeit des Fahrzeuglenkrads beim Aufprall eines Insassen.

Das flexible Verbindungselement weist keine Eigensteifigkeit auf und ist vorzugsweise als textiles Verbindungselement, insbesondere als Gewebe ausgeführt. Textile Materialien, insbesondere Gewebe, sind relativ leicht und preiswert sowie in Bezug auf das optische Erscheinungsbild vielseitig anpassbar. Außerdem ist der Einfluss eines solchen textilen Materials auf das Dämpfungsverhalten des Fahrzeuglenkrads bei einem Insassenaufprall weitgehend vernachlässigbar.

Gemäß einer bevorzugten Ausführungsform des Fahrzeuglenkrads weist die Lenkradnabe ein nabenseitiges Lager zur Befestigung eines ersten Endes des flexiblen Verbindungselements und der Lenkradkranz ein kranzseitiges Lager zur Befestigung eines zweiten Endes des flexiblen Verbindungselements auf, wobei wenigstens eines der beiden Lager als Spannlager ausgeführt ist, welches das Verbindungselement mit einer Zugkraft beaufschlagt. Dadurch wird das flexible Verbindungselement unabhängig von Temperaturdehnungen, Krafteinwirkungen am Lenkradkranz, Materialalterung o.ä. in einem gestrafften Zustand gehalten. Ein als optischer Mangel wirkendes, schlaffes Durchhängen des flexiblen Verbindungselements wird auf diese Weise dauerhaft und zuverlässig verhindert.

Beispielsweise kann das eine der beiden Lager, insbesondere das nabenseitige Lager, als Spannlager und das andere der beiden Lager, insbesondere das kranzseitige Lager, als Festlager ausgeführt sein. Alternativ sind jedoch selbstverständlich auch Lenkradvarianten mit zwei Spannlagern vorstellbar. Ein Festlager als starre Anbindung des flexiblen Verbindungselements ist mit geringem Aufwand besonders preiswert realisierbar, zum Beispiel durch eine Verschraubung, und eignet sich darüber hinaus aufgrund seines geringen Bauraumbedarfs speziell auch als kranzseitiges Lager. Ein Spannlager, das in der Regel etwas aufwendiger und teurer ist, genügt in der Regel zur dauerhaften Straffung des flexiblen Verbindungselements und wird vorzugsweise nabenseitig vorgesehen, da der Bauraumbedarf im Vergleich zum Festlager üblicherweise etwas größer ist.

Bevorzugt weist das Spannlager wenigstens ein Federelement auf, welches das flexible Verbindungselement mit einer Federkraft beaufschlagt und straff spannt. Auf diese Weise lässt sich das Verbindungselement einfach und preiswert vorspannen und ein unerwünschtes, schlaffes Durchhängen des flexiblen Verbindungselements dauerhaft verhindern.

Gemäß einer Ausführungsvariante ist ein dem Spannlager zugeordnetes Ende des flexiblen Verbindungselements (direkt oder indirekt) am Federelement befestigt und über das Federelement, insbesondere ausschließlich über das Federelement, an der Lenkradnabe oder am Lenkradkranz angebracht.

Gemäß einer alternativen Ausführungsvariante ist ein dem Spannlager zugeordnetes Ende des flexiblen Verbindungselements (direkt oder indirekt) an der Lenkradnabe oder am Lenkradkranz fest angebracht, wobei das Federelement zwischen den entgegengesetzten Enden des Verbindungselements an diesem angreift und mit einer Federkraft beaufschlagt. Bevorzugt ist dabei auch das Federelement an der Lenkradnabe bzw. am Lenkradkranz fest angebracht.

Ein nabenseitiges Lager für das flexible Verbindungselement kann insbesondere unmittelbar durch ein Skelett der Lenkradnabe oder durch eine Nabenblende gebildet sein, welche am Skelett befestigt ist.

Ein kranzseitiges Lager für das flexible Verbindungselement kann insbesondere unmittelbar durch ein Skelett des Lenkradkranzes oder durch eine Kranzblende gebildet sein, welche am Skelett und/oder an einer Skelettumschäumung befestigt ist.

Gemäß einer weiteren Ausführungsform des Fahrzeuglenkrads ist wenigstens eines der beiden Enden des flexiblen Verbindungselements mit einem Kunststoffmaterial umspritzt und dadurch fest mit diesem Kunststoffmaterial verbunden, wobei in dem Kunststoffmaterial eine Formschlusskontur und/oder eine Reibschlusskontur zur Befestigung des flexiblen Verbindungselements an der Lenkradnabe oder am Lenkradkranz angeformt ist.

Gemäß einer Variante des Fahrzeuglenkrads ist das Verbindungselement ein elastisches Verbindungselement, welches ausgehend von einer Längsabmessung zwischen seinen Enden im entspannten Zustand eine elastische Dehnbarkeit von wenigstens 5%, insbesondere wenigstens 10%, aufweist.

Weitere Merkmale und Vorteile der Erfindung ergeben sich aus den Unteransprüchen sowie aus der nachfolgenden Beschreibung bevorzugter Ausführungsformen unter Bezugnahme auf die Zeichnungen. In diesen zeigt:
- Figur 1 eine Draufsicht eines erfindungsgemäßen Fahrzeuglenkrads mit einem flexiblen Verbindungselement zwischen einem Lenkradkranz und einer Lenkradnabe;
- Figur 2 einen Schnitt II-II durch das Fahrzeuglenkrad gemäß Figur 1;
- Figur 3 eine perspektivische Detailansicht des flexiblen Verbindungselements im Bereich eines kranzseitigen Lagers gemäß einer Ausführungsform;
- Figur 4 einen Detailschnitt durch das flexible Verbindungselement gemäß Figur 3 im Bereich des kranzseitigen Lagers;
- Figur 5 eine perspektivische Detailansicht des flexiblen Verbindungselements im Bereich eines kranzseitigen Lagers gemäß einer weiteren Ausführungsform;
- Figur 6 einen Detailschnitt durch das flexible Verbindungselement gemäß Figur 5 im Bereich des kranzseitigen Lagers;
- Figur 7 eine perspektivische Detailansicht des flexiblen Verbindungselements im Bereich eines kranzseitigen Lagers gemäß einer weiteren Ausführungsform;
- Figur 8 einen Detailschnitt durch das flexible Verbindungselement gemäß Figur 7 im Bereich des kranzseitigen Lagers;
- Figur 9 eine teiltransparente Detailansicht des flexiblen Verbindungselements gemäß Figur 7 im Bereich des kranzseitigen Lagers;
- Figur 10 eine perspektivische Detailansicht des flexiblen Verbindungselements im Bereich eines kranzseitigen Lagers gemäß einer weiteren Ausführungsform;
- Figur 11 einen Detailschnitt durch das flexible Verbindungselement gemäß Figur 10 im Bereich des kranzseitigen Lagers;
- Figur 12 eine perspektivische Detailansicht des flexiblen Verbindungselements im Bereich eines kranzseitigen Lagers gemäß einer weiteren Ausführungsform;
- Figur 13 einen Detailschnitt durch das flexible Verbindungselement gemäß Figur 12 im Bereich des kranzseitigen Lagers;
- Figur 14 eine perspektivische Detailansicht des flexiblen Verbindungselements im Bereich eines kranzseitigen Lagers gemäß einer weiteren Ausführungsform;
- Figur 15 einen Detailschnitt durch das flexible Verbindungselement gemäß Figur 14 im Bereich des kranzseitigen Lagers;
- Figur 16 eine perspektivische Detailansicht des flexiblen Verbindungselements im Bereich eines kranzseitigen Lagers gemäß einer weiteren Ausführungsform;
- Figur 17 einen Detailschnitt durch das flexible Verbindungselement gemäß Figur 16 im Bereich des kranzseitigen Lagers;
- Figur 18 eine perspektivische Detailansicht des flexiblen Verbindungselements im Bereich eines kranzseitigen Lagers gemäß einer weiteren Ausführungsform;
- Figur 19 einen Detailschnitt durch das flexible Verbindungselement gemäß Figur 18 im Bereich des kranzseitigen Lagers;
- Figur 20 eine perspektivische Detailansicht des flexiblen Verbindungselements im Bereich eines kranzseitigen Lagers gemäß einer weiteren Ausführungsform;
- Figur 21 einen Detailschnitt durch das flexible Verbindungselement gemäß Figur 20 im Bereich des kranzseitigen Lagers;
- Figur 22 eine perspektivische Detailansicht des flexiblen Verbindungselements im Bereich eines nabenseitigen Lagers gemäß einer Ausführungsform;
- Figur 23 einen Detailschnitt durch das flexible Verbindungselement gemäß Figur 22 im Bereich des nabenseitigen Lagers;
- Figur 24 eine perspektivische Detailansicht des flexiblen Verbindungselements im Bereich eines nabenseitigen Lagers gemäß einer weiteren Ausführungsform;
- Figur 25 einen Detailschnitt durch das flexible Verbindungselement gemäß Figur 24 im Bereich des nabenseitigen Lagers;
- Figur 26 eine perspektivische Detailansicht des flexiblen Verbindungselements im Bereich eines nabenseitigen Lagers gemäß einer weiteren Ausführungsform;
- Figur 27 einen Detailschnitt durch das flexible Verbindungselement gemäß Figur 26 im Bereich des nabenseitigen Lagers;
- Figur 28 eine perspektivische Detailansicht des flexiblen Verbindungselements im Bereich eines nabenseitigen Lagers gemäß einer weiteren Ausführungsform;
- Figur 29 einen Detailschnitt durch das flexible Verbindungselement gemäß Figur 28 im Bereich des nabenseitigen Lagers;
- Figur 30 eine perspektivische Detailansicht des flexiblen Verbindungselements im Bereich eines nabenseitigen Lagers gemäß einer weiteren Ausführungsform;
- Figur 31 einen Detailschnitt durch das flexible Verbindungselement gemäß Figur 30 im Bereich des nabenseitigen Lagers;
- Figur 32 eine perspektivische Detailansicht des flexiblen Verbindungselements im Bereich eines nabenseitigen Lagers gemäß einer weiteren Ausführungsform;
- Figur 33 einen Detailschnitt durch das flexible Verbindungselement gemäß Figur 32 im Bereich des nabenseitigen Lagers;
- Figur 34 eine perspektivische Detailansicht des flexiblen Verbindungselements im Bereich eines nabenseitigen Lagers gemäß einer weiteren Ausführungsform;
- Figur 35 einen Detailschnitt durch das flexible Verbindungselement gemäß Figur 34 im Bereich des nabenseitigen Lagers;
- Figur 36 eine perspektivische Detailansicht des flexiblen Verbindungselements im Bereich eines nabenseitigen Lagers gemäß einer weiteren Ausführungsform;
- Figur 37 einen Detailschnitt durch das flexible Verbindungselement gemäß Figur 36 im Bereich des nabenseitigen Lagers;
- Figur 38 eine perspektivische Detailansicht des flexiblen Verbindungselements im Bereich eines nabenseitigen Lagers gemäß einer weiteren Ausführungsform;
- Figur 39 einen Detailschnitt durch das flexible Verbindungselement gemäß Figur 38 im Bereich des nabenseitigen Lagers;
- Figur 40 eine perspektivische Detailansicht des flexiblen Verbindungselements im Bereich eines nabenseitigen Lagers gemäß einer weiteren Ausführungsform; und
- Figur 41 einen Detailschnitt durch das flexible Verbindungselement gemäß Figur 40 im Bereich des nabenseitigen Lagers.

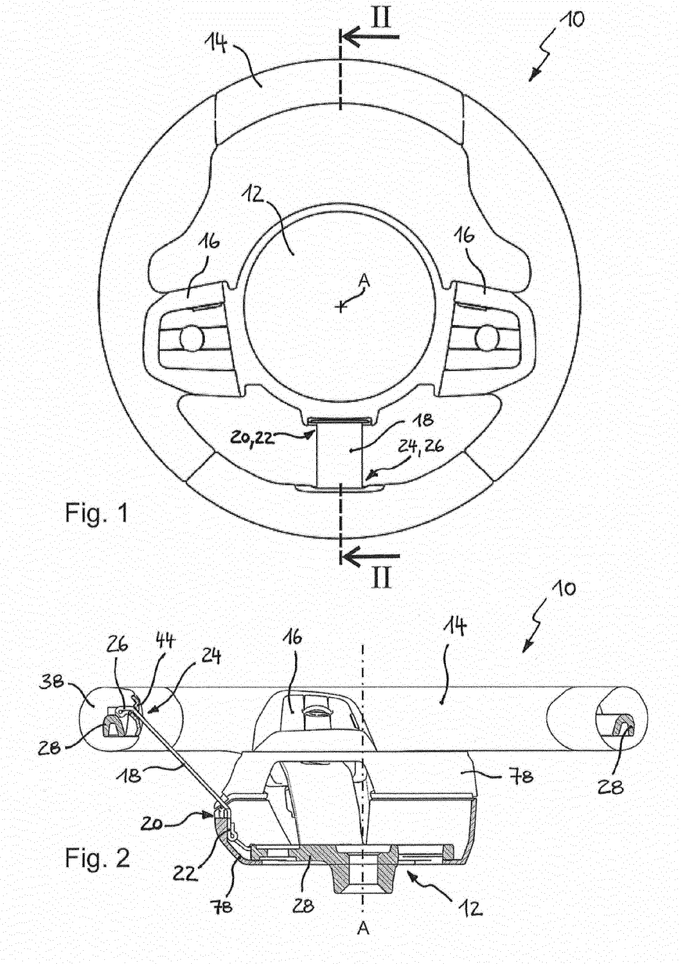

Die Figuren 1 und 2 zeigen ein Fahrzeuglenkrad 10, mit einer Lenkradachse A, um die das Fahrzeuglenkrad 10 im eingebauten Zustand drehbar ist, einer zentralen Lenkradnabe 12 zur Befestigung des Fahrzeuglenkrads 10 in einem Kraftfahrzeug, durch welche sich die Lenkradachse A erstreckt, einem Lenkradkranz 14, der die Lenkradnabe 12 zumindest teilweise umgibt, und wenigstens einer im Wesentlichen starren Lenkradspeiche 16, welche den Lenkradkranz 14 an der Lenkradnabe 12 befestigt, wobei die Lenkradnabe 12 und der Lenkradkranz 14 ferner durch ein flexibles Verbindungselement 18 miteinander verbunden sind.

Der Lenkradkranz 14 umschließt die Lenkradnabe 12 ringförmig und ist in der dargestellten Lenkradvariante im Wesentlichen kreisrund ausgeführt. Alternativ sind aber natürlich auch andere Kranzformen denkbar, beispielsweise oval oder eckig/ polygonförmig.

In der vorliegenden Ausführungsform des Fahrzeuglenkrads 10 sind zwei starre Lenkradspeichen 16 auf etwa 3 Uhr und 9 Uhr vorgesehen, sowie ein flexibles Verbindungselement 18 auf etwa 6 Uhr. Dies ist besonders vorteilhaft, da der besonders insassennahe 6-Uhr-Bereich des Lenkradkranzes 14 verglichen mit der Ausführung einer starren Lenkradspeiche 16 auf 6 Uhr bei einem Insassenaufprall eine größere Dämpfung/Nachgiebigkeit aufweist. Generell ist die Position oder Anordnung der wenigstens einen (starren) Lenkradspeiche 16 und des flexiblen Verbindungselements 18 im Rahmen der vorliegenden Anmeldung aber frei wählbar.

Im vorliegenden Fall ist das flexible Verbindungselement 18 ein textiles Verbindungselement 18, konkret ein Gewebe. Alternativ kann jedoch auch eine flexible Kunststofffolie o.ä. zum Einsatz kommen.

Das flexible Verbindungselement 18 erzeugt optisch den Eindruck eines 3-Speichen-Lenkrads und muss vergleichsweise geringe Anforderungen erfüllen. So sollte das Verbindungselement 18 UV-beständig sein und eine gewisse Robustheit gegenüber äußeren mechanischen Einwirkungen durch Fahrzeuginsassen sowie im Langzeitverhalten eine geringe Kriechneigung aufweisen, um eine gewünschte Vorspannung dauerhaft zu gewährleisten.

Anhand der Figuren 1 und 2 wird deutlich, dass die Lenkradnabe 12 ein nabenseitiges Lager 20 zur Befestigung eines ersten Endes 22 des flexiblen Verbindungselements 18 und der Lenkradkranz 14 ein kranzseitiges Lager 24 zur Befestigung eines zweiten Endes 26 des flexiblen Verbindungselements 18 aufweisen. Dabei ist wenigstens eines der beiden Lager 20, 24 als Spannlager ausgeführt, welches das Verbindungselement 18 mit einer Zugkraft beaufschlagt und dauerhaft spannt.

Insbesondere ist das eine der beiden Lager 20, 24, hier das nabenseitige Lager 20, als Spannlager und das andere der beiden Lager 20, 24, hier das kranzseitige Lager 24, als Festlager ausgeführt. Es sind jedoch auch Ausführungsformen des Fahrzeuglenkrads 10 denkbar, bei denen sowohl nabenseitig als auch kranzseitig ein Spannlager zur Befestigung des flexiblen Verbindungselements 18 vorgesehen ist. Unter einem Festlager ist dabei eine Lagerstruktur an der Lenkradnabe 12 oder am Lenkradkranz 14 zu verstehen, die eine einfache und im Wesentlichen starre Fixierung eines Endes 22, 26 des flexiblen Verbindungselements 18 ermöglicht. Hingegen ist unter einem Spannlager eine Lagerstruktur an der Lenkradnabe 12 oder am Lenkradkranz 14 zu verstehen, die das flexible Verbindungselement 18 ebenfalls an einem Ende 22, 26 fixiert, jedoch zusätzlich noch mit einer Zugkraft beaufschlagt und auf diese Weise dauerhaft spannt. Dabei ist das Spannlager mit Blick auf Zugkraft und Längenausgleich so konstruiert, dass das Verbindungselement 18 auch unter ungünstigen Randbedingungen (z.B. sehr niedrige Temperatur in Kombination mit einer radial einwärts gerichtete Insassenkraft auf den Lenkradkranz 14 im 6-Uhr-Bereich nach einigen Jahren Nutzungsdauer) straff gespannt bleibt und ein schlaffes Durchhängen des flexiblen Verbindungselements 18 zuverlässig verhindert wird.

In einer alternativen Variante des Fahrzeuglenkrads 10 ist das Verbindungselement 18 aus einem elastischen Material gefertigt, welches ausgehend von einer Längsabmessung zwischen den Enden 22, 26 des Verbindungselements 18 im entspannten Zustand eine elastische Dehnbarkeit von wenigstens 5%, insbesondere wenigstens 10% aufweist. Auf diese Weise lässt sich ebenfalls sicherstellen, dass das Verbindungselement 18 auch unter ungünstigen Randbedingungen (z.B. sehr niedrige Temperatur in Kombination mit einer radial einwärts gerichtete Insassenkraft auf den Lenkradkranz 14 im 6-Uhr-Bereich nach einigen Jahren Nutzungsdauer) straff gespannt bleibt und ein schlaffes Durchhängen des flexiblen Verbindungselements 18 zuverlässig verhindert wird. Ein Spannlager wäre in diesem Fall nicht unbedingt notwendig. Beide Lager können als Festlager ausgeführt sein, wobei jedes Ende 22, 26 des Verbindungselements 18 beispielsweise am zugeordneten Festlager eingeclipst wird, um eine (lösbare) Rastverbindung auszubilden und eine einfache Austauschbarkeit des Verbindungselements 18 zu ermöglichen.

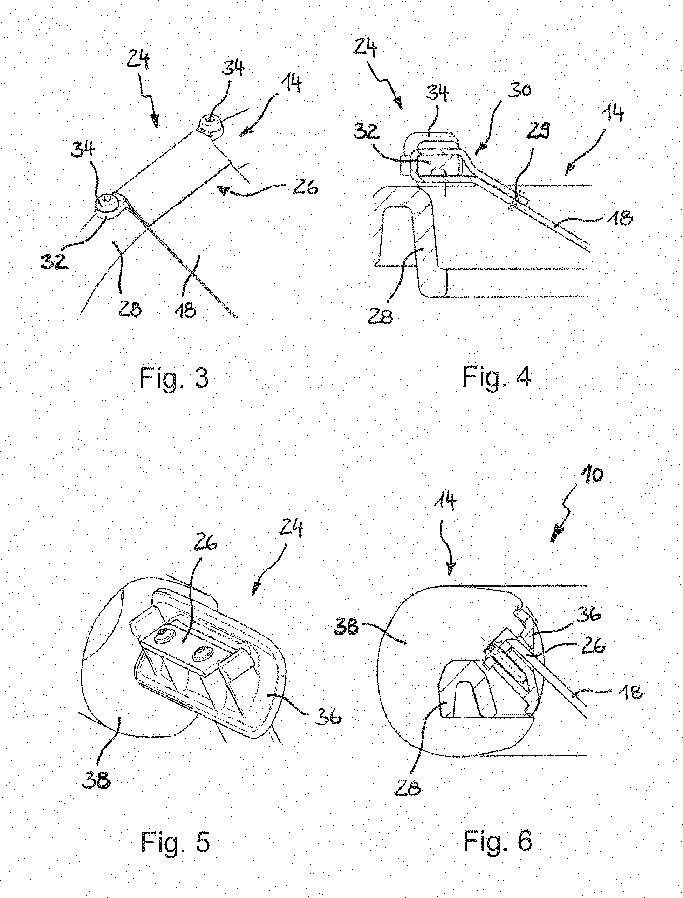

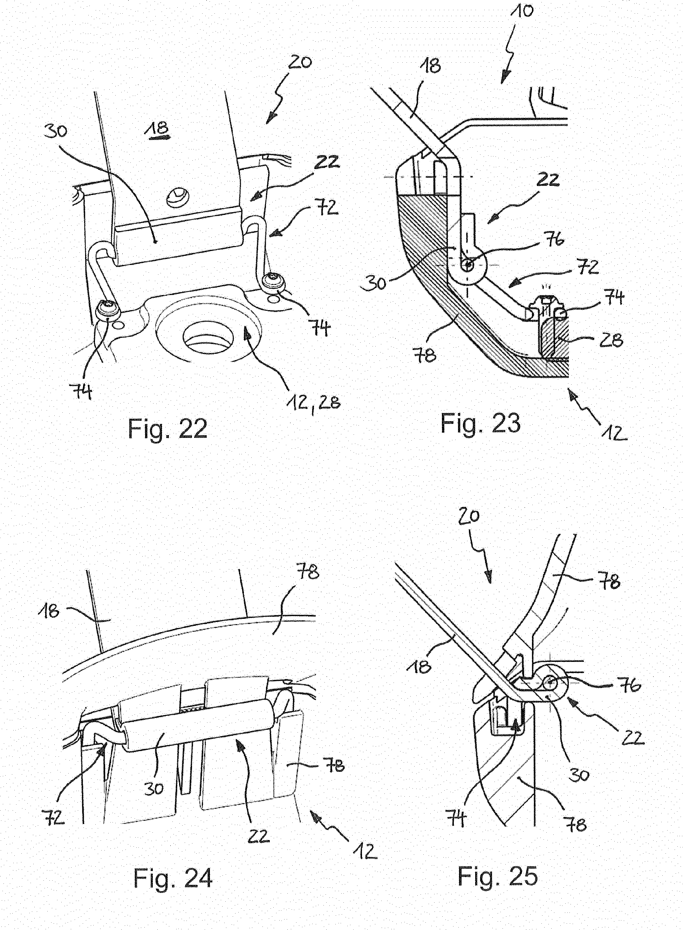

Nachfolgend werden anhand der Figuren 3-21 unterschiedliche Ausführungsvarianten eines Festlagers und anhand der Figuren 22-41 unterschiedliche Ausführungsvarianten eines Spannlagers vorgestellt. Dabei sind die Festlagervarianten kranzseitig und die Spannlagervarianten nabenseitig veranschaulicht, wobei dies nicht einschränkend, sondern lediglich beispielhaft zu verstehen ist.

Die Figuren 3 und 4 zeigen ein als Festlager ausgeführtes, kranzseitiges Lager 24, welches unmittelbar durch ein Skelett 28 des Lenkradkranzes 14 gebildet ist. Hierzu ist am zweiten Ende 26 des flexiblen Verbindungselements 18, z.B. mittels einer Naht 29, eine Schlaufe 30 ausgebildet, in welche ein Lagerstab 32 eingefädelt ist. Die Enden des Lagerstabs 32 ragen seitlich aus der Schlaufe 30 heraus und sind direkt mit dem metallenen Skelett 28 des Fahrzeuglenkrads 10 verschraubt. Auf diese Weise ist das zweite Ende 26 des flexiblen Verbindungselements 18 zuverlässig und fest am Lenkradkranz 14 fixiert. Nach der Fixierung des Verbindungselements 18 kann in diesem Bereich eine Skelettumschäumung 38 (siehe zum Beispiel Figur 2) vorgesehen werden, wobei das Skelett 28 dann beispielsweise zusammen mit dem Lagerstab 32, den Schrauben 34 und dem zweiten Ende 26 des flexiblen Verbindungselements 18 eingeschäumt wird.

Die Figuren 5 und 6 zeigen eine Variante des als Festlager ausgeführten, kranzseitigen Lagers 24, das im Unterschied zur vorigen Ausführungsform durch eine Kranzblende 36 aus Kunststoff gebildet ist, welche wiederum an einer Skelettumschäumung 38 befestigt, insbesondere verrastet ist. Alternativ oder zusätzlich kann die Kranzblende 36 auch am Skelett 28 befestigt, insbesondere verrastet sein. Das zweite Ende 26 des flexiblen Verbindungselements 18 ist hier direkt mit der Kranzblende 36 verschraubt, wobei die Kranzblende 36 am fertigen Fahrzeuglenkrad 10 zumindest teilweise sichtbar bleibt (vgl. Figuren 2 und 6).

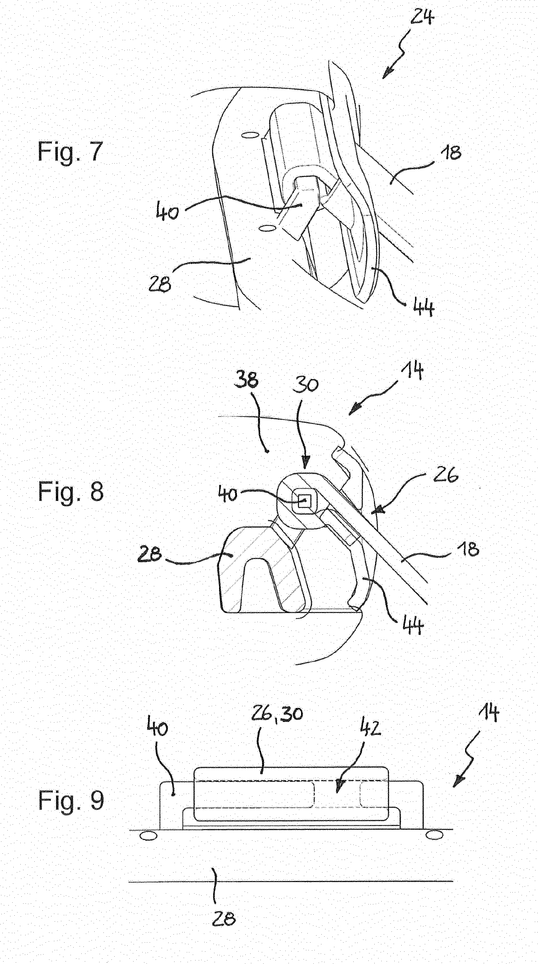

Die Figuren 7-9 zeigen eine Variante eines als Festlager ausgeführten, kranzseitigen Lagers 24, bei der das zweite Ende 26 des flexiblen Verbindungselements 18 nicht verschraubt, sondern durch einen Lagerbügel 40 am Lenkradkranz 14 fixiert ist. Der Lagerbügel 40 ist dabei fest mit dem Skelett 28 verbunden, insbesondere einstückig mit dem Skelett 28 ausgebildet (vgl. Figuren 7 und 8), und weist eine Unterbrechung 42 zum Einfädeln der am zweiten Ende 26 des flexiblen Verbindungselements 18 gebildeten Schlaufe 30 auf (vgl. Figur 9). Ferner ist gemäß den Figuren 7 und 8 eine Sichtblende 44 vorgesehen, um den Bereich des kranzseitigen Lagers 24 zu verkleiden. Die Sichtblende 44 ist an der Skelettumschäumung 38 befestigt und weist keinerlei Lagerfunktion auf, sondern dient hier ausschließlich der Optik.

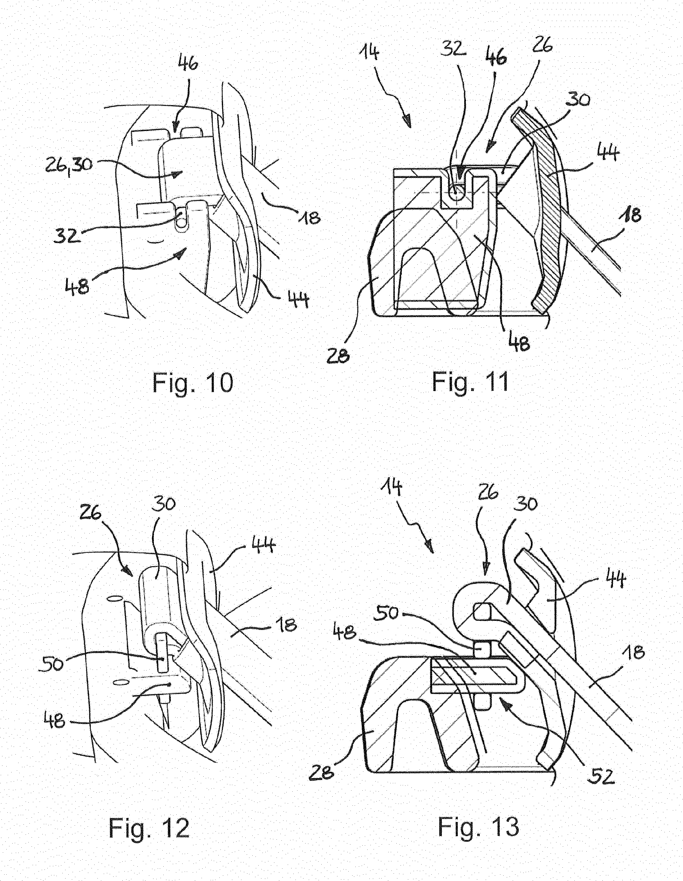

Die Figuren 10 und 11 zeigen eine kranzseitige Festlagervariante mit einem separaten Lagerstab 32, insbesondere aus Metall, der in eine am zweiten Ende 26 des flexiblen Verbindungselements 18 ausgebildete Schlaufe 30 eingefädelt ist. Im Unterschied zu der ähnlichen Ausführungsform gemäß den Figuren 3 und 4 sind die aus der Schlaufe 30 herausragenden Enden des Lagerstabs 32 jedoch nicht mit dem Skelett 28 verschraubt, sondern in Ausnehmungen 46 eines fest mit dem Skelett 28 verbundenen oder einstückig mit dem Skelett 28 ausgebildeten Lagerabschnitts 48 eingesteckt. Analog zur Ausführung gemäß den Figuren 7 bis 9 ist aus optischen Gründen auch hier eine Sichtblende 44 vorgesehen.

Die kranzseitige Festlagervariante gemäß den Figuren 12 und 13 unterscheidet sich von der Ausführungsform gemäß den Figuren 10 und 11 lediglich dadurch, dass der Lagerstab 32 durch einen Lagerbügel 50 ersetzt und der Lagerabschnitts 48 in seiner Form angepasst, insbesondere fertigungstechnisch vereinfacht ist. So wird der Lagerabschnitt 48 hier durch einen simplen Skelettvorsprung gebildet, auf den der Lagerbügel 50 so aufgesteckt wird, dass sich der Lagerabschnitt 48 durch eine Öffnung 52 des Lagerbügels 50 erstreckt (Figur 13). Wird das flexible Verbindungselement 18 mit einer Zugkraft beaufschlagt, so verkeilt sich der Lagerbügel 50 am Lagerabschnitt 48 und ist auf diese Weise zuverlässig am Lenkradkranz 14 befestigt.

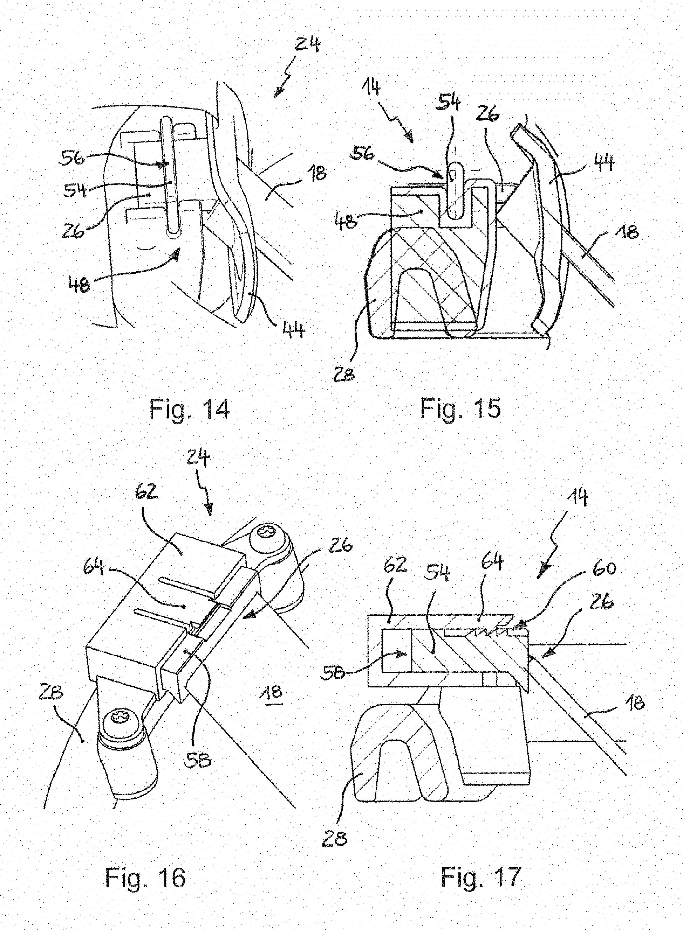

Bei den nachfolgenden Ausführungsvarianten eines kranzseitigen Festlagers gemäß den Figuren 14-21 ist zumindest das zweite Ende 26 des flexiblen Verbindungselements 18 mit einem Kunststoffmaterial 54 umspritzt und dadurch fest mit dem Kunststoffmaterial 54 verbunden, wobei in dem Kunststoffmaterial 54 eine Formschlusskontur und/oder eine Reibschlusskontur zur Befestigung des flexiblen Verbindungselements 18 am Lenkradkranz 14 angeformt ist.

So unterscheidet sich die kranzseitige Festlagervariante gemäß den Figuren 14 und 15 von der Ausführungsform gemäß den Figuren 10 und 11 im Wesentlichen dadurch, dass hier ein Lagerstab 56 aus dem Kunststoffmaterial 54 direkt an das zweite Ende 26 des flexiblen Verbindungselements 18 angespritzt und auf diese Weise bereits fest am Verbindungselement 18 angebracht ist. Dementsprechend kann die Bildung einer Schlaufe 30 am zweiten Ende 26 des flexiblen Verbindungselements 18 sowie das Einfädeln eines separaten Lagerstabs 32 in die Schlaufe 30 entfallen.

Auch in der kranzseitigen Festlagervariante gemäß den Figuren 16 und 17 ist das zweite Ende 26 des flexiblen Verbindungselements 18 mit einem Kunststoffmaterial 54 umspritzt und dadurch fest mit dem Kunststoffmaterial 54 verbunden, wobei das Kunststoffmaterial 54 hier eine Art Steckverbinder 58 bildet und eine Formschlusskontur 60 zur Befestigung des flexiblen Verbindungselements 18 am Lenkradkranz 14 aufweist.

Am Lenkradkranz 14 ist eine komplementär zum Steckverbinder 58 ausgebildete Lagerbuchse 62 vorgesehen, mit einer elastischen Rastzunge 64, welche mit der Formschlusskontur 60 des Steckverbinders 58 eine Rastverbindung ausbilden kann. Die Lagerbuchse 62 ist dabei fest am Skelett 28 des Lenkradkranzes 14 angebracht, insbesondere mit diesem verschraubt.

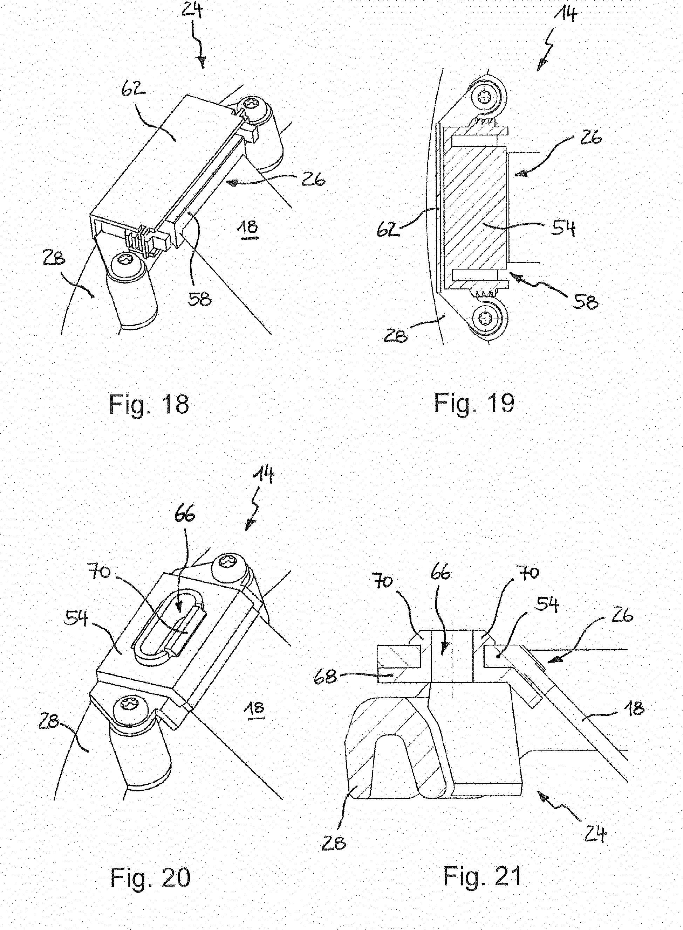

Die Ausführungsform gemäß den Figuren 18 und 19 zeigt ebenfalls ein in Form eines Steckverbinders 58 umspritztes zweites Ende 26 des flexiblen Verbindungselements 18 sowie eine am Lenkradkranz 14 angebrachte, komplementär ausgebildete Lagerbuchse 62. Verglichen mit der kranzseitigen Festlagervariante gemäß den Figuren 16 und 17 ist hier lediglich eine alternative Rastverbindung dargestellt.

Schließlich zeigen die Figuren 20 und 21 noch eine weitere kranzseitige Festlagervariante, bei der das zweite Ende 26 des flexiblen Verbindungselements 18 mit einem Kunststoffmaterial 54 umspritzt ist, wobei ein aus dem Kunststoffmaterial 54 gebildeter Kunststoffkörper eine zentrale Öffnung 66 aufweist. Am Lenkradkranz 14 ist ein Lagerelement 68 mit elastischen Befestigungsclips 70 angebracht, insbesondere verschraubt, wobei die zentrale Öffnung 66 des Kunststoffkörpers auf die elastischen Befestigungsclips 70 gedrückt wird, bis diese einen Öffnungsrand der Öffnung 66 hintergreifen, sodass das zweite Ende 26 des flexiblen Verbindungselement 18 zuverlässig am Lenkradkranz 14 fixiert ist.

Wie bereits oben erwähnt, werden nunmehr anhand der Figuren 22-41 unterschiedliche Ausführungsbeispiele eines Spannlagers vorgestellt.

Dabei weist jedes Spannlager wenigstens ein Federelement 72 auf, welches das flexible Verbindungselement 18 mit einer Zugkraft beaufschlagt.

Die Figuren 22 und 23 zeigen ein als Spannlager ausgeführtes, nabenseitiges Lager 20, bei dem das erste Ende 22 des flexiblen Verbindungselements 18 direkt am Federelement 72 befestigt und ausschließlich über das Federelement 72 an der Lenkradnabe 12 angebracht ist.

Das Federelement 72 ist hier ein als Bügelfeder ausgebildetes, U-förmiges Biegeteil aus Federdraht, dessen entgegengesetzte Federenden 74 jeweils unmittelbar am Skelett 28 des Fahrzeuglenkrads 10 im Bereich der Lenkradnabe 12 befestigt, insbesondere verschraubt sind. Analog zu den Figuren 3 und 4 ist am ersten Ende 22 des flexiblen Verbindungselements 18 eine Schlaufe 30 ausgebildet, welche an einem zentralen Bügelabschnitt 76 des Federelements 72 angreift.

Das Verbindungselement 18 und das Federelement 72 sind im Einbauzustand so aufeinander abgestimmt, dass das Verbindungselement 18 vom Federelement 72 mit einer Zugkraft beaufschlagt wird. Bei einer Verformung des Fahrzeuglenkrads 10, beispielsweise durch Temperaturdehnung oder äußere Einwirkung durch einen Fahrzeuginsassen, wird dies durch eine entsprechende, elastische Verformung des Federelements 72 ausgeglichen, sodass das Verbindungselement 18 stets mit einer Zugkraft beaufschlagt und folglich straff gespannt bleibt.

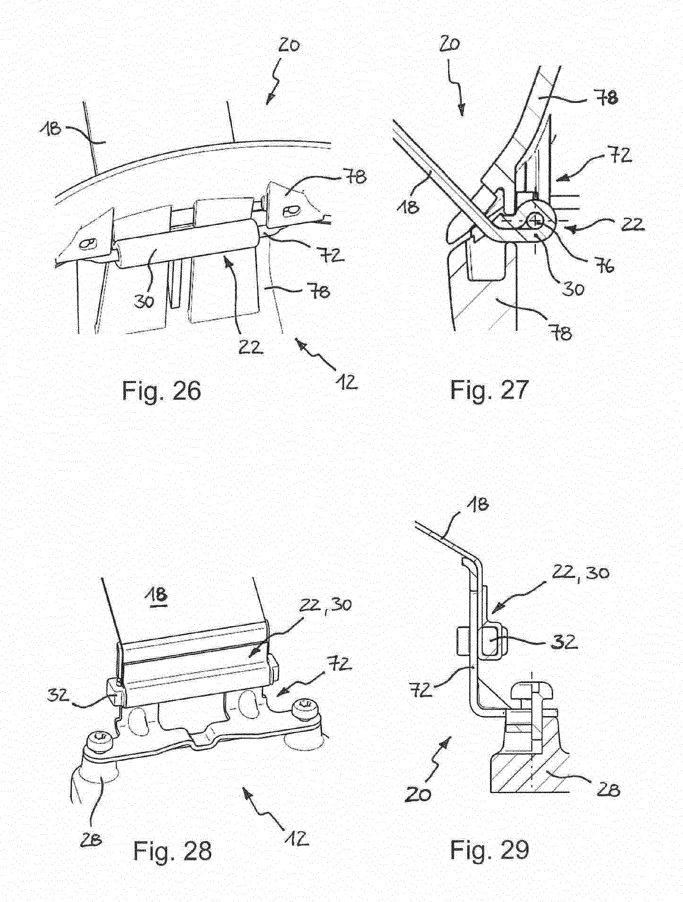

Die Ausführungsformen gemäß den Figuren 24 bis 27 unterscheiden sich vom Spannlager der Figuren 22 und 23 lediglich dadurch, dass das Federelement 72 jeweils an einer Nabenblende 78 befestigt ist, wobei es sich bei der Nabenblende 78 gemäß den Figuren 24 und 25 um eine Rückabdeckung der Lenkradnabe 12 und gemäß den Figuren 26 und 27 um eine Frontblende der Lenkradnabe 12 handelt. Die Nabenblende 78 ist wiederum fest am Skelett 28 angebracht, sodass das erste Ende 22 des Verbindungselements 18 hier jeweils über das Federelement 72 und die Nabenblende 78 fest mit dem Skelett 28 verbunden ist.

Das Spannlager gemäß den Figuren 28 und 29 ähnelt in seinem konstruktiven Aufbau dem in den Figuren 3 und 4 dargestellten Festlager und ist unmittelbar durch das Skelett 28 der Lenkradnabe 12 gebildet. Im Unterschied zu den Figuren 3 und 4 ist der Lagerstab 32 jedoch nicht direkt am Skelett 28, sondern an dem nach Art einer gebogenen Blattfeder ausgebildeten Federelement 72 befestigt, welches dann wiederum fest mit dem Skelett 28 der Lenkradnabe 12 verbunden, insbesondere verschraubt ist.

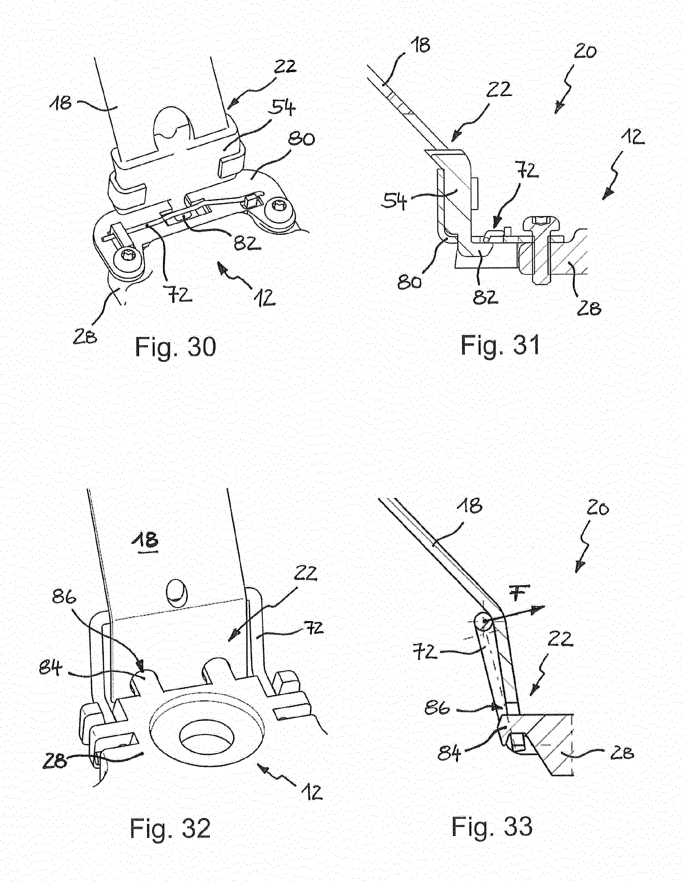

Die Figuren 30 und 31 zeigen eine Lagerausführung, bei der das erste Ende 22 des flexiblen Verbindungselements 18 mit einem Kunststoffmaterial 54 umspritzt und dadurch fest mit dem Kunststoffmaterial 54 verbunden ist. Nabenseitig ist ein mit dem Skelett 28 verbundenes, insbesondere verschraubtes Lagerteil 80 vorgesehen, an dem das Federelement 72 montiert ist. Am Kunststoffmaterial 54 ist ein Federhaken 82 angeformt, der mit dem Federelement 72 des Lagerteils 80 so verrastet, dass das Federelement 72 das Verbindungselement 18 mit einer Zugkraft beaufschlagt und dauerhaft spannt.

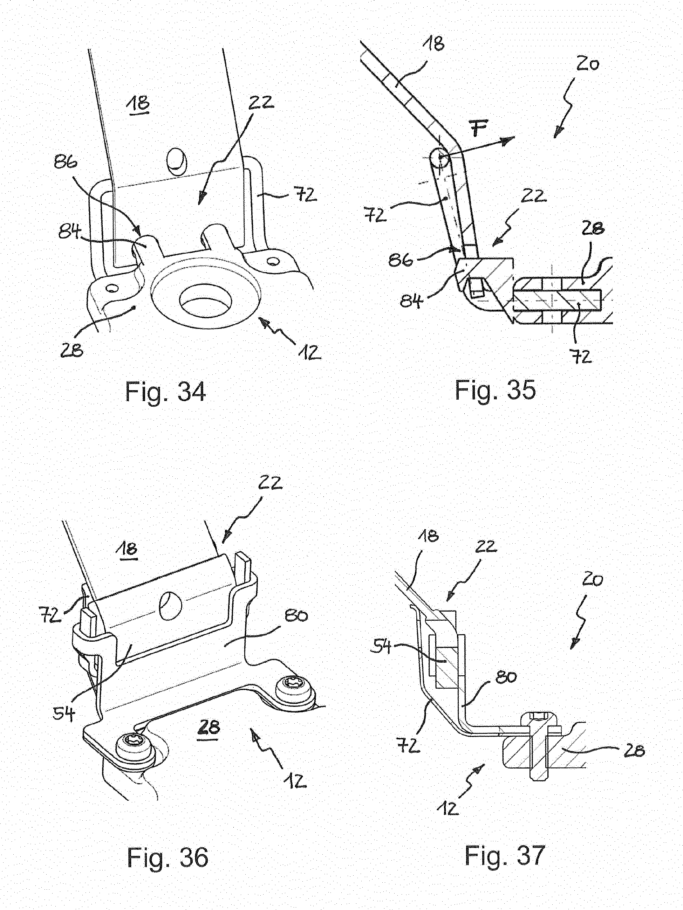

Nachfolgend sind schließlich noch Ausführungsvarianten dargestellt, bei denen das dem Spannlager zugeordnete, erste Ende 22 des flexiblen Verbindungselements 18 fest (sowie insbesondere unmittelbar) an der Lenkradnabe 12 oder einer Nabenblende 78 angebracht ist, wobei das Federelement 72 zwischen den entgegengesetzten Enden 22, 26 des flexiblen Verbindungselements 18 an diesem angreift und das Verbindungselement 18 mit einer Zugkraft beaufschlagt. Das Federelement 18 kann dabei insbesondere an der Lenkradnabe 12 angebracht sein. Die Zugbeaufschlagung des bandförmig-flächigen, flexiblen Verbindungselements 18 erfolgt dabei vorzugsweise durch eine Federkraft F des Federelements 72, welche sich quer zu einer Ebene erstreckt, die vom bandförmig-flächigen, flexiblen Verbindungselement 18 aufgespannt wird (vgl. zum Beispiel Figuren 33 und 35).

Gemäß den Figuren 32 bis 35 sind am Skelett 28 der Lenkradnabe 12 Lagerhaken 84 vorgesehen, welche sich durch Lageröffnungen 86 erstrecken, die am ersten Ende 22 des flexiblen Verbindungselements 18 ausgebildet sind. Ferner ist am Skelett 28 der Lenkradnabe 12 das Federelement 72 in Form einer Bügelfeder befestigt, wobei das Federelement 72 zwischen den entgegengesetzten Enden 22, 26 am flexiblen Verbindungselement 18 angreift, um dieses mit einer Zugkraft zu beaufschlagen und dauerhaft zu spannen. In der Lagerausführung nach Figur 34 und Figur 35 sind Abschnitte des Federelements 72, insbesondere die entgegengesetzten Enden des Federelements 72, direkt in das als Spritzgussteil ausgeführte Skelett 28 des Fahrzeuglenkrads 10 eingespritzt, sodass keine weiteren Befestigungsmittel nötig sind. Generell kann das Federelement 72 jedoch auf beliebige Weise am Skelett 28 fixiert sein.

Das in den Figuren 36 und 37 dargestellte Spannlager unterscheidet sich nur dadurch von den beiden vorigen Ausführungsformen, dass das nabenseitige Lager 20 des flexiblen Verbindungselements 18 nicht direkt am Skelett 28 angeformt ist und das erste Ende 22 des Verbindungselements 18 folglich auch nicht unmittelbar am Skelett 28 der Lenkradnabe 12 angreift. Stattdessen ist das erste Ende 22 des flexiblen Verbindungselements 18 an einem Lagerteil 80 angebracht, das wiederum am Skelett 28 der Lenkradnabe 12 befestigt, insbesondere verschraubt ist.

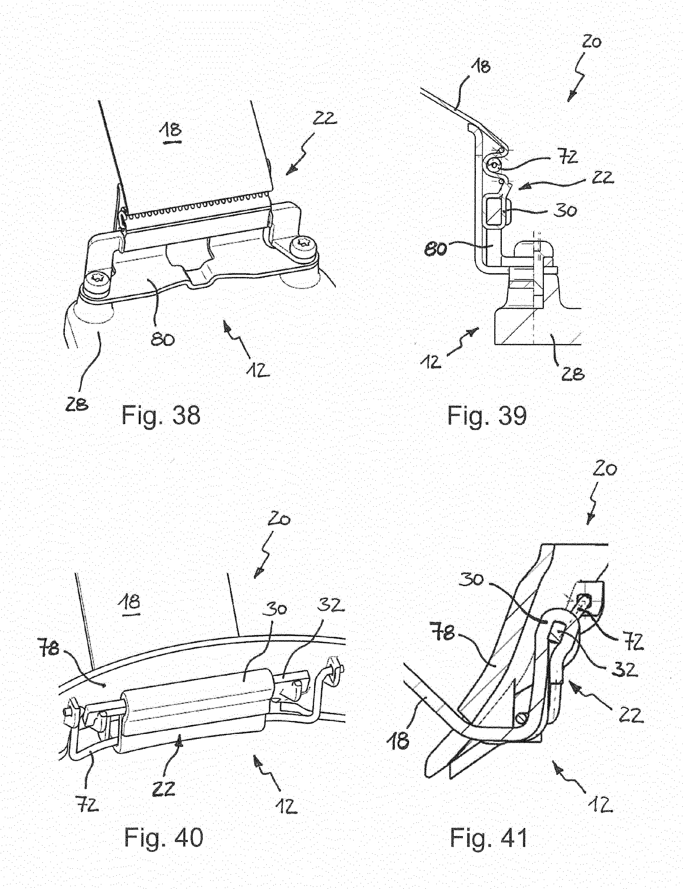

Auch in der Ausführungsform gemäß den Figuren 38 und 39 ist das erste Ende 22 des flexiblen Verbindungselements 18 an einem Lagerteil 80 angebracht, das wiederum am Skelett 28 der Lenkradnabe 12 befestigt, insbesondere verschraubt ist. Das Federelement 72 ist hier jedoch nicht unmittelbar am Skelett 28 der Lenkradnabe 12 angebracht, sondern angrenzend an das erste Ende 22 zwischen den beiden Enden 22, 26, des Verbindungselements 18 nach Art einer Federklammer eingeknüpft, um das flexible Verbindungselement 18 mit einer Zugkraft zu beaufschlagen und dauerhaft zu spannen bzw. gespannt zu halten.

Die Figuren 40 und 41 zeigen schließlich eine Variante des als Spannlager ausgebildeten, nabenseitigen Lagers 20, bei der sowohl das Lager 20 für das erste Ende 22 des flexiblen Verbindungselements 18 als auch das Federelement 72 zum Spannen des Verbindungselements 18 an einer Nabenblende 78 vorgesehen sind, wobei die Nabenblende 78 wiederum fest mit dem Skelett 28 des Fahrzeuglenkrads 10 verbunden ist.

## Patentansprüche

1. Fahrzeuglenkrad, mit
einer zentralen Lenkradnabe (12) zur Befestigung des Fahrzeuglenkrads (10) in einem Kraftfahrzeug, durch welche sich eine Lenkradachse (A) erstreckt,
einem Lenkradkranz (14), der die Lenkradnabe (12) zumindest teilweise umgibt, und
wenigstens einer Lenkradspeiche (16), welche den Lenkradkranz (14) an der Lenkradnabe (12) befestigt,
**dadurch gekennzeichnet, dass** die Lenkradnabe (12) und der Lenkradkranz (14) ferner durch ein flexibles Verbindungselement (18) miteinander verbunden sind.

2. Fahrzeuglenkrad nach Anspruch 1, **dadurch gekennzeichnet, dass** das flexible Verbindungselement (18) ein textiles Verbindungselement, insbesondere ein Gewebe ist.

3. Fahrzeuglenkrad nach einem der vorhergehenden Ansprüche, **dadurch gekennzeichnet, dass** die Lenkradnabe (12) ein nabenseitiges Lager (20) zur Befestigung eines ersten Endes (22) des flexiblen Verbindungselements (18) und der Lenkradkranz (14) ein kranzseitiges Lager (24) zur Befestigung eines zweiten Endes (26) des flexiblen Verbindungselements (18) aufweisen, wobei wenigstens eines der beiden Lager (20, 24) als Spannlager ausgeführt ist, welches das Verbindungselement (18) mit einer Zugkraft beaufschlagt.

4. Fahrzeuglenkrad nach Anspruch 3, **dadurch gekennzeichnet, dass** das eine der beiden Lager (20, 24), insbesondere das nabenseitige Lager (20), als Spannlager und das andere der beiden Lager (20, 24), insbesondere das kranzseitige Lager (24), als Festlager ausgeführt ist.

5. Fahrzeuglenkrad nach Anspruch 3 oder 4, **dadurch gekennzeichnet, dass** das Spannlager wenigstens ein Federelement (72) aufweist, welches das flexible Verbindungselement (18) mit einer Federkraft beaufschlagt und straff spannt.

6. Fahrzeuglenkrad nach Anspruch 5, **dadurch gekennzeichnet, dass** ein dem Spannlager zugeordnetes Ende (22, 26) des flexiblen Verbindungselements (18) am Federelement (72) befestigt und über das Federelement 0 an der Lenkradnabe (12) oder am Lenkradkranz (14) angebracht ist.

7. Fahrzeuglenkrad nach Anspruch 5, **dadurch gekennzeichnet, dass** ein dem Spannlager zugeordnetes Ende (22, 26) des flexiblen Verbindungselements (18) an der Lenkradnabe (12) oder am Lenkradkranz (14) fest angebracht ist, wobei das Federelement (72) zwischen den entgegengesetzten Enden (22, 26) des flexiblen Verbindungselements (18) an diesem angreift und mit einer Federkraft beaufschlagt.

8. Fahrzeuglenkrad nach einem der Ansprüche 3 bis 7, **dadurch gekennzeichnet, dass** das nabenseitige Lager (20) unmittelbar durch ein Skelett (28) der Lenkradnabe (12) oder durch eine Nabenblende (36) gebildet ist, welche am Skelett (28) befestigt ist.

9. Fahrzeuglenkrad nach einem der Ansprüche 3 bis 8, **dadurch gekennzeichnet, dass** das kranzseitige Lager (24) unmittelbar durch ein Skelett (28) des Lenkradkranzes (14) oder durch eine Kranzblende (36) gebildet ist, welche am Skelett (28) und/oder an einer Skelettumschäumung (38) befestigt ist.

10. Fahrzeuglenkrad nach einem der vorhergehenden Ansprüche, **dadurch gekennzeichnet, dass** wenigstens eines der Enden (22, 26) des flexiblen Verbindungselements (18) mit einem Kunststoffmaterial (54) umspritzt und dadurch fest mit dem Kunststoffmaterial (54) verbunden ist, wobei in dem Kunststoffmaterial (54) eine Formschlusskontur (60) und/oder eine Reibschlusskontur zur Befestigung des flexiblen Verbindungselements (18) an der Lenkradnabe (12) oder am Lenkradkranz (14) angeformt ist.

11. Fahrzeuglenkrad nach einem der vorhergehenden Ansprüche, **dadurch gekennzeichnet, dass** das Verbindungselement (18) ein elastisches Verbindungselement (18) ist.
